# EUROPEAN PATENT APPLICATION

(11) **EP 2 503 442 A2**
(43) Date of publication of application: **26.09.2012**
(21) Application number: 12160594.3
(22) Date of filing: 21.03.2012
(51) Int. Cl.: G06F 3/048

(54) **Method and apparatus of managing items on clipboard of portable terminal**

(30) Priority: 21.03.2011 KR 20110025008
(71) Applicant: Samsung Electronics Co., Ltd., Suwon-si, Gyeonggi-do, 443-742 (KR)
(72) Inventor: Han, Hyun Kyu, Gyeonggi-do (KR); Kim, Myoung Gyu, Gyeonggi-do (KR); Kang, Yeon Gu, Gyeonggi-do (KR)
(74) Representative: Jenkins, Richard Gavin

(57) **Abstract**

A portable terminal and a method for managing items on a clipboard of the portable terminal are provided for a user to copy text and data items simultaneously onto the clipboard and paste the copied items individually where the user desires. The portable terminal of the present invention includes a touchscreen and a control unit which controls presenting a display region showing a screen corresponding to user command on the touchscreen in response to an execution of at least one application, presenting a clipboard region at a part of the touchscreen in response to a user command, and displaying clip data selected by the user among at least one clip data appearing in the clipboard region on the display region.

## Description

### BACKGROUND OF THE INVENTION

### 1. Field of the Invention:

The present invention relates to a portable terminal. More particularly, the present invention relates to a portable terminal and a method for managing items on a clipboard of the portable terminal that enables a user to copy text and data items simultaneously on to the clipboard and to paste the copied items individually where and when the user intends.

### 2. Description of the Related Art:

With the advance of digital technologies, various types of portable terminals (e.g., mobile phone, Personal Digital Assistant (PDA), electronic notebook, smartphone, and tablet Personal Computer (PC)) have emerged. In addition to the basic voice and call and short messaging functions, such portable terminals are equipped with diverse functions including a video call function, an electronic organizer function, a document writing function, an email function, an Internet access function, etc.

The clipboard function is an important function of the recent portable terminal. The clipboard function allows a user to copy and paste data between files. In the conventional portable terminal, however, the clipboard function is limited to one item at a time. In other words, in the conventional portable terminals, the clipboard function is limited to allowing a user to copy and/or paste a single item at a time. Accordingly, in order to move a plurality of items, a user must perform copy-and-paste operations as many times as the number of items to move. In addition, to move a plurality of items, the user must perform copy-and-paste operations while transitioning between the source data screen for copying the items and the destination data screen for pasting the copied items, resulting in cumbersome and time-consuming processes.

Furthermore, the conventional clipboard function is also limited in the types of data that the clipboard function may copy-and-paste. The conventional clipboard function is limited to text or image data types. Due to these restrictions, it is impossible to transfer text and image items from an execution screen of an application such as web browser interoperating with Internet access function to another application execution screen simultaneously.

### SUMMARY OF THE INVENTION

Aspects of the present invention are to address at least the above-mentioned problems and/or disadvantages and to provide at least the advantages described below. Accordingly, an aspect of the present invention is to provide a portable terminal and method for managing items on a clipboard of the portable terminal that is capable of improving clipboard functionality.

Another aspect of the present invention is to provide a portable terminal and method for managing items on a clipboard of the portable terminal that is capable of copying multiple items to the clipboard and pasting the individual items selectively where the user intends by calling the target item through a clipboard window.

Another aspect of the present invention is to provide a portable terminal and method for managing items on a clipboard of the portable terminal that is capable of copying and pasting multimedia data items such as still and motion picture and audio data items in combination with text items.

Another aspect of the present invention is to provide a portable terminal and method for managing items on a clipboard of the portable terminal that is capable of improving user convenience and terminal usability and competitiveness with the enhanced clipboard functionality.

In accordance with an aspect of the present invention, a portable terminal providing a clipboard is provided. The portable terminal includes a touchscreen, and a control unit which controls presenting a display region showing a screen corresponding to user command on the touchscreen in response to an execution of at least one application, presenting a clipboard region at a part of the touchscreen in response to a user command, and displaying clip data selected by the user among at least one clip data appearing in the clipboard region on the display region.

In accordance with another aspect of the present invention, a method for managing a clipboard of a portable terminal is provided. The method includes executing at least one application, presenting a display region showing a screen corresponding to a user command in response to the execution of the application, presenting a clipboard region at an area of the touchscreen in response to a user command, and displaying clip data selected by the user among at least one clip data appearing in the clipboard region on the display region.

In accordance with another aspect of the present invention, a method for controlling a clipboard of a portable terminal is provided. The method includes displaying a first screen of source data, copying a part selected from the source data, saving the copied source data as a clip data item, displaying a second screen in response to a user request, presenting a clipboard window on the second screen, and pasting the clip data item selected from the clip window onto the second screen in response to a user request.

In accordance with another aspect of the present invention, a method for controlling a clipboard of a portable terminal is provided. The method includes displaying a screen including source data, selecting at least a part of the screen as a copied data item according to a first type event, generating a clip data item using the copied data item in response to a second type event, and saving a preview data item representing the clip data item on the clipboard along with the clip data item.

In accordance with another aspect of the present invention, a clipboard control method of a portable terminal is provided. The clipboard control method includes displaying a screen for receiving data entered by a user, presenting a clipboard window, on the screen, for calling a clip data item saved on a clipboard in response to an event, calling a clip data item represented by one of preview data items presented in the clipboard window in response to a selection event, pasting the called clip data item at a position on the screen as indicated by the selection event, and hiding the clipboard window after the clip data item is pasted.

In accordance with another aspect of the present invention, a clipboard control method of a portable terminal is provided The clipboard control method includes displaying a screen for receiving data input by a user, presenting a clipboard window including at least one clip data item on the screen in response to a user request, detecting an event corresponding to a command to paste the clip data item represented by a preview data item selected in the clipboard window, checking an application type when the event is detected, pasting, if the application type is a type supporting a web language format, the clip data item in web language format, checking, if the application type is a type not supporting the web language format, a data format supported by the application, and pasting, if the application type is of a type not supporting the web language format, clip data item on the screen after converting to the data format supported by the application.

In accordance with another aspect of the present invention, a portable terminal is provided. The terminal includes a display unit for outputting a screen, an input unit for receiving user input, a storage unit for storing data items, a portion of the storage unit corresponding to a clipboard, a controller that is configured for receiving inputs from the input unit and for controlling the screen output by the display unit, wherein the controller controls the display unit to display a screen including source data, receives a first type event input, selects at least a part of the screen as a copied data item according to the first type event input, receives a second type event, generates a clip data item using the copied data item in response to the second type event, and saves a preview data item representing the clip data item on the clipboard along with the clip data item.

In accordance with another aspect of the present invention, a non-transitory computer readable medium is provided. The non-transitory computer readable medium stores a program for controlling a clipboard of a portable terminal, comprising instructions to cause a processor to: display a first screen of source data, copy at least a part of the source data in response to a user request, save the copied source data as a clip data item, display a second screen in response to a user request, present a clipboard window on the second screen in response to a user request, and paste the clip data item selected from the clip window onto the second screen in response to a user request.

In accordance with still another aspect of the present invention, a computer-readable storage medium recorded a program executing the above method by a processor.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:

FIG. 1 is a block diagram illustrating a configuration of a portable terminal according to an exemplary embodiment of the present invention;

FIG. 2 is a flowchart illustrating a method of managing items on a clipboard of a portable terminal according to an exemplary embodiment of the present invention;

FIG. 3 is a flowchart illustrating a procedure for generating a clip data item in a method for managing items on a clipboard of a portable terminal according to an exemplary embodiment of the present invention;

FIG. 4 is a diagram illustrating a principle of preview data item generation in a method for managing items on a clipboard of a portable terminal according to an exemplary embodiment of the present invention;

FIG. 5 is a flowchart illustrating a method of managing items on a clipboard of a portable terminal according to an exemplary embodiment of the present invention;

FIG. 6 is a diagram illustrating exemplary application execution screens for showing an operation of clipboard window display in a clipboard control method according to an exemplary embodiment of the present invention;

FIG. 7 is a diagram illustrating exemplary application execution screens for showing an operation of clip data item display in a clipboard control method according to an exemplary embodiment of the present invention;

FIGs. 8A and 8B are diagrams illustrating exemplary execution screens of an application operating with a clipboard control method according to an exemplary embodiment of the present invention; and

FIG. 9 is a flowchart illustrating a method of managing items on a clipboard of a portable terminal according to an exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

Various exemplary embodiments propose a portable terminal and a method for managing items on a clipboard of the portable terminal that is capable of copying at least one item onto the clipboard accumulatively and thereafter individually pasting the copied at least one item when and where the user intends. Particularly, in an exemplary embodiment of the present invention, the portable terminal can be configured to copy a combination of text and multimedia data items from an application execution screen (e.g. a webpage) and save the items to the clipboard. Also, the portable terminal can be configured to call the items saved through the clipboard window selectively so as to paste the selected item to a new application execution screen according to the user's intention.

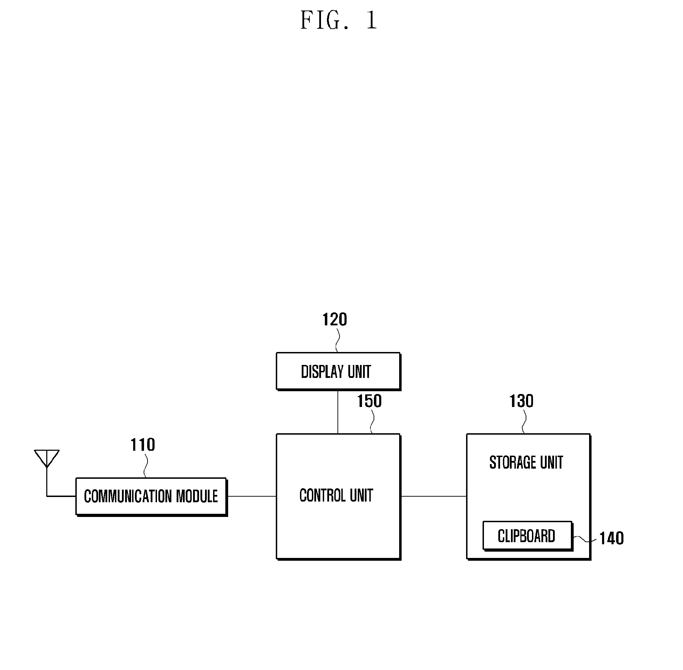

FIGs. 1 through 9, discussed below, and the various exemplary embodiments used to describe the principles of the present disclosure in this patent document are by way of illustration only and should not be construed in any way that would limit the scope of the disclosure. Those skilled in the art will understand that the principles of the present disclosure may be implemented in any suitably arranged system such as a portable terminal. The terms used to describe various embodiments are exemplary. It should be understood that these are provided to merely aid the understanding of the description, and that their use and definitions in no way limit the scope of the invention. Terms first, second, and the like are used to differentiate between objects having the same terminology and are in no way intended to represent a chronological order, unless where explicitly stated otherwise.

For example, a description is made of a configuration of a portable terminal and method for controlling the operations of the portable terminal according to various exemplary embodiments.

FIG. 1 is a block diagram illustrating a configuration of a portable terminal according to an exemplary embodiment.

Referring to FIG. 1, the portable terminal includes a communication module 110, a display unit 120, a storage unit 130, and a control unit 150. Although not depicted in the drawing, the portable terminal may include an audio processing unit having a microphone and a speaker, a digital broadcast module for receiving and playing digital broadcast (e.g. Digital Multimedia Broadcasting (DMB) and Digital Video Broadcasting (DVB)), at least one short range radio communication module such as Bluetooth, Infrared Data Association (IrDA), Radio Frequency Identification (RFID), and Near Field Communication (NFC) modules, a touchpad and a touchscreen supporting touch-based input, and a battery for power supply to the internal function blocks.

The communication module 110 may be the module for supporting radio communication service such as cellular communication service and Internet access service (e.g. Wi-Fi service) based on a Wireless Local Area Network (WLAN) technology. For example, the communication module 110 may be configured for establishing a communication channel with a network to transmit and receive radio signals carrying data. Particularly, in an exemplary embodiment of the present invention, the communication module 110 may receive the signal carrying web-based data (e.g. webpage written in a web language).

The display unit 120 is configured for displaying data related to configuration and operation status of the portable terminal. For example, the display unit 120 can display the home screen and execution screens of applications running on the portable terminal such as text messaging, email, Internet access, search, communication, e-book, still/motion picture capture and playback, mobile broadcast playback, audio playback, game applications, and the like. Particularly, the display unit 120 may be configured for presenting a screen capable of input of certain data in response to a user command and for presenting a clipboard region called in response to a user command. In an exemplary embodiment, the display unit 120 can display a webpage received through the communication module 110 on the display region. The display unit 120 can display the execution screen in which a part of the webpage is blocked by the user and at least one of the text and multimedia items is pasted onto another execution screen according to the user's manipulation. In an exemplary embodiment, the display unit 120 may display a clipboard window showing the clipped data items in the form of preview window on the clip board region. The clipboard window can be described in detail later.

The display unit 120 may be implemented with one of Liquid Crystal Display (LCD), Light Emitting Diode (LED), Organic LED (OLED), Active Matrix OLED (AMOLED), and the like. The display unit 120 supports landscape mode and portrait mode for displaying the aforementioned application execution screen (e.g. display region, clipboard region, etc.). According to an exemplary embodiment of the present invention, the display unit 120 may provide a touch-based input interface. For example, the display unit 120 may be provided with a touchscreen so as to generate and send an input signal to the control unit 150 in response to a user's interaction with the touchscreen. For example, the display unit 120 may generate and send an input single to the control unit 150 in response to a user touching the touchscreen.

The storage unit 130 may store various programs and data executable in the portable terminal and may include at least one of volatile and non-volatile memories. The non-volatile memories include, for example, Read Only Memory (ROM), flash memory, and the like, and the volatile memories include Random Access Memory (RAM), and the like. The storage unit 130 stores the Operating System (OS) of the portable terminal, programs and data related to the control of the display unit 120, touchscreen-based input operation control, and clipboard function control. The storage unit 130 may also semi-permanently or temporarily store programs and data related to clipped data and preview data items generation.

According to an exemplary embodiment of the present invention, the storage unit 130 may store various configuration information related to the operation of the clip board function. The configuration information may include the information on the clip data item and preview data item generation scheme and multimedia data download method. The storage unit 130 may store one or more clip data and preview data items selected by the user. As an example, the clip and preview data items can be preserved in the clipboard 140 until the user deletes such items. As another example, a clip and/or preview data item may also be deleted from the clipboard 140 based on a predefined amount of time having elapsed from when the respective clip and/or preview data item was copied (and thus inserted in the clipboard 140).

The control unit 150 controls overall operations of the portable terminal. The control unit 150 may control the operations related to the clipboard functionality. For example, the control unit 150 may control the operations such as copying certain data (e.g. text, multimedia data, and combination of text and multimedia data) according to a copy command, and generate a clip data item and preview data item on the copied data. As an example, the control unit 150 may generate the clip data item based on the web language such as, for example, Hyper Text Markup Language (HTML) and extensible Markup Language (XML). The control unit 150 may also control to generate the preview data item using typical data or captured data corresponding to the clipped data. According to an exemplary embodiment, the control unit 150 may control the operation related to the clipboard window. For example, the control unit 150 can control to display the display region showing the screen (e.g. webpage screen, email composition screen, etc.) on the display unit 120, when at least one application is executed in response to a user request. The control unit 150 also may control to display the clip data selected by the user among at least one clip data displayed in the clipboard window within the display region. Detailed control operations of the control unit 150 are described along with the exemplary operations of the portable terminal and control method thereof with reference to the accompanying drawings.

The control unit 150 may also control the operations related to the generation functions of the portable terminal in addition to the above-described functions. For example, the control unit 150 may control the operations of a certain application and display of the execution screen of the application. The control unit 150 receives the signal input by input means. For example, input means may include a touch-based input interface such as a touchscreen, a keyboard, a dial pad, and the like. The control unit 150 executes the operation instructed by the input signal. The control unit 150 may also control the data communication of the portable through wired or wireless channel.

The portable terminal of FIG. 1 can be implemented in one of bar type, folder type, slide type, and slip type designs. The method of managing items on a clipboard can be applied to all the types of information communication devices, multimedia devices, and their equivalents supporting clipboard function. For example, the portable terminal can be any of a mobile communication terminal, tablet PC, and smartphone equipped with the communication modules supporting respective communication protocols. The clipboard control method according to an exemplary embodiment of the present invention can be applied to electronic devices including a Portable Multimedia Player (PMP), a Digital Broadcast player, a Personal Digital Assistant (PDA), a portable game console, a Television (TV), a Large Format Display (LFD), a Digital Signage (DS), a media pole, and the like.

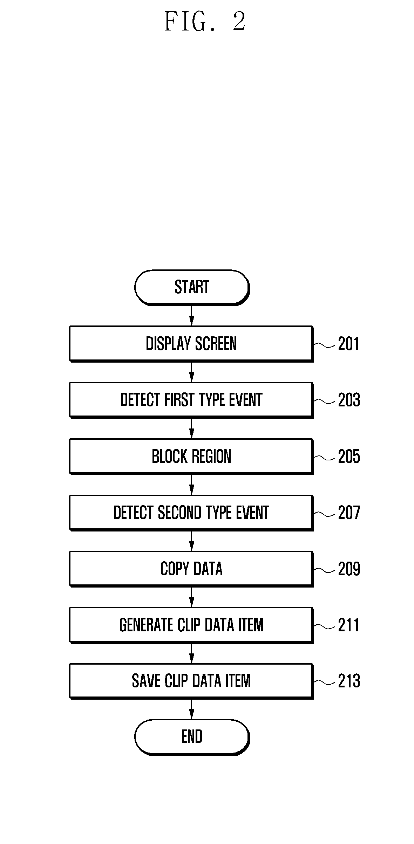

FIG. 2 is a flowchart illustrating a method of managing items on a clipboard of a portable terminal according to an exemplary embodiment of the present invention. Particularly, FIG. 2 is directed to an operation for copying certain data to generate and save a clip data item.

Referring to FIG. 2, the control unit 150 controls to display an execution screen including data items at step 201. For example, the control unit 150 controls to execute an application and display the execution screen of the application in response to a user request. The application may be a web browser application which is executed with the display of a webpage provided by a web server. The webpage may include multimedia data items such as still and motion pictures, and text items. The multimedia data items can include audio data item representing a playable audio file. The text and multimedia data represented by the items are referred to as source data.

Next, the control unit 150 detects a first type event at step 203. For example, the control unit 150 can detect an event for selecting a part or whole of the execution screen having the items. As an example, the first event can be a touch event made on the display unit (e.g., on a touchscreen) or a physical key selection event made on a keypad. The first type event may be the event made for copying a part or whole of the source data by blocking (e.g., selecting) a corresponding part of the execution screen and saving the copied data onto the clipboard. Accordingly, the control unit 150 controls to block a region of the execution screen in response to the first type event at step 205.

Next, the control unit 150 detects a second type event in the state where a region is blocked on the execution screen at step 207. The second type event may be a copy command event for copying the data item selected by the first type event (i.e. the data item in the region blocked by the first type event). The second type event may correspond to a touch event (e.g., on a touchscreen or the like), or a physical key selection event.

Next, the control unit 150 copies the data item selected by the second type event (i.e., the copy event) at step 209, and generates a clip data item at step 211. For example, the control unit 150 executes copy command for the data items in the blocked region in response to the second type event so as to process the copied data into a clip data item. As an example, the control unit 150 may format the selected data using a web language such as, for example, HTML and XML. The web language is a basic programming language used for generating a web document (e.g. a webpage).

According to an exemplary embodiment, the clip data item may consist of commands (e.g. tags) indicating font size, font color, and font type of the selected data (i.e. source data), still image, motion image, audio data, and hyperlink. Accordingly, when pasting the saved clip data item to another data item of a certain screen, the format of the original may be maintained. A paste operation is described later in more detail.

Although not depicted in FIG. 2, a preview data item corresponding to the clip data item can be generated and stored in the clip data item generation process in response to the second type event. An operation for generating and storing preview data item is described later.

Finally, the control unit 150 controls to store the generated clip data item at step 213. For example, the control unit 150 saves the clip data item on the clipboard 140 of the storage unit 130, and the clip data item can be saved along with other clip data items in accumulative manner. For example, the clip data item may be saved in match (e.g., in linked relation) with the corresponding preview data by means of meta-information. If the preview data item is selected in the clipboard window to be described afterward, the clip data item linked to the selected preview data item is called so as to be pasted at a position designated by the user. Detailed description thereon is made later.

Although not depicted in FIG. 2, the data copy operation according to the first and second type events may be repeated according to the user's intention. Accordingly, multiple clip data items may be saved on the clipboard accumulatively. The data saved on the clipboard can be stored temporarily, semi-permanently, or permanently according to the user configuration or settings.

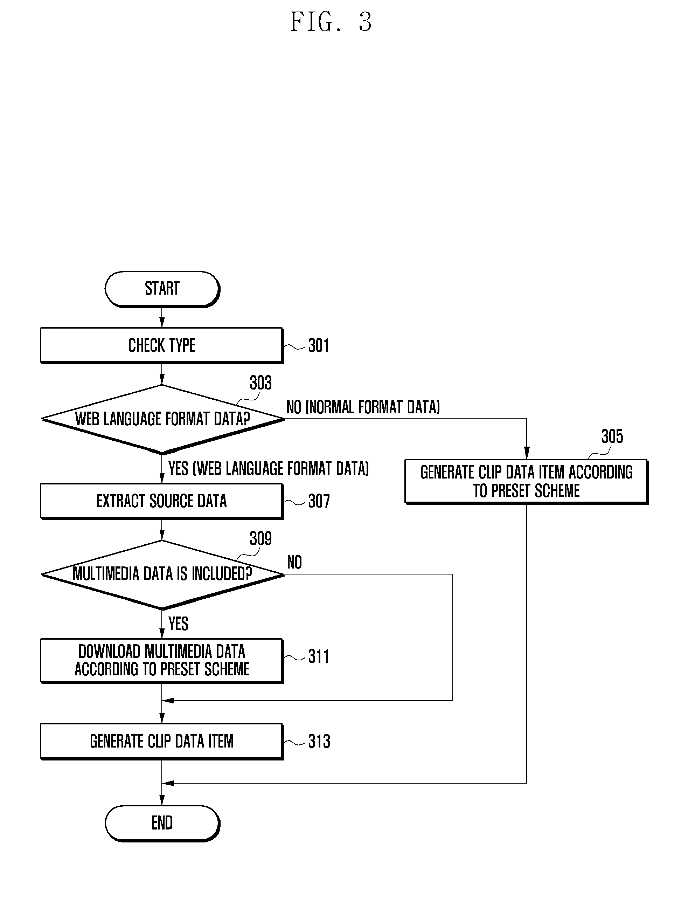

FIG. 3 is a flowchart illustrating a procedure for generating a clip data item in a method for managing items on a clipboard of a portable terminal according to an exemplary embodiment of the present invention. For example, FIG. 3 depicts the details of clip data item generation step (e.g., step 211) of FIG. 2.

Referring to FIG. 3, when generating the clip data item with the copied data, the control unit 150 checks the type of the data time in the blocked region in response to the first type event at step 301 and determines whether the data item is a web language-based data item or a normal data item at step 303. For example, the control unit 150 can determine whether the data item selected in the blocked region is web language-based data item (hereinafter, referred to as web language format data) provided by a certain web server or normal data stored in the portable terminal (hereinafter, referred to as normal format data). For example, a normal format data may include data in a format standard that is readable by portable terminals. As an example, the data format may be determined depending on whether the currently executed application is a web application for presenting the data provided by a server connected through the Internet or cellular network (e.g. web browsing application) or other document viewer application (e.g. word processor application).

If it is determined that the data item is a normal format data item at step 303, then the control unit 150 controls to generate the clip data item in a preset format at step 305. For example, if the copied data item is a normal format data item, the control unit 150 can process the copied data item into a clip data item without change of format or convert the copied data item into the clip data item formatted with a web language (e.g. HTML or XML). If the copied data item includes text and multimedia data such as a still image, then the control unit 150 may copy all of the text and multimedia data to generate a clip data item.

If it is determine that the data item is a web language format data item at step 303, then the control unit 150 extracts the source of the copied data item at step 307. For example, the control unit 150 extracts web language (e.g. HTML or XML) tags of the copied data from the source data.

Next, the control unit 150 determines whether the copied data item includes multimedia data based on the extracted source at step 309. For example, the control unit 150 may determine whether there is a tag defining a hyperlink in association with a still image, a motion image, or audio data by analyzing the source of the copied data item.

If the copied data item does not include any multimedia data at step 309, then the control unit 150 controls to generate the clip data item with the text constituting the copied data item at step 313. If the copied data item includes only text, then the control unit 150 can copy only the text to generate the clip data item or to process the copied data into the clip data item while maintaining the web language-based data format. When generating the web language-based clip data item, the clip data item may include tags defining font size, font color, font type, and hyperlink of the text of the copied data item.

If the copied data item includes multimedia data at step 309, then the control unit 50 downloads the multimedia data according to a preset method at step 311 and generates a clip data item with the downloaded multimedia data at step 313. For example, the multimedia data download may be performed in a first type download method in which the multimedia data itself is downloaded or a second type download method in which the link information (or address information) on the web server storing the multimedia data is copied.

In an exemplary embodiment in which the first download method is used to download the multimedia data, the control unit 150 may download the multimedia data indicated in the copied data item from the web server at step 311. The control unit 150 generates the web language-based clip data item using the text included in the copied data item and the downloaded multimedia data at step 313. That is, the control unit 150 may control to generate the clip data item with the combination of the tag defining the text included in the copied data and the tag defining the downloaded multimedia data (e.g. still image, motion image, audio data, or the like). For example, the control unit 150 can control to generate the clip data item as a combination of the tags defining font size, font color, font type, and hyperlink (e.g. the link to the corresponding web server) of the text included in the copied data, and the tag defining the hyperlink to the multimedia data downloaded and stored (e.g. meta data (or link) for calling the multimedia data downloaded and stored in the portable terminal).

In an exemplary embodiment in which the second download method is used to download the multimedia data, the control unit 150 can control to generate web language-based clip data item using the text included in the copied data and the link information (or address information) on the web server storing the multimedia data rather than downloading the multimedia data at step 313. That is, the control unit 150 can control to combine the tags defining the text included in the copied data and the tag defining the link information (address information) of the web server storing the multimedia data indicated in the copied data item to generate the clip data item. For example, the control unit 150 can generate the clip data item by combining the tags defining the font size, font color, font type, and hyperlink (e.g. the link to the corresponding web server) of the text included in the copied data and the tag defining the hyperlink to the multimedia data of the copied data (e.g. the link to the web server from which the multimedia data is downloaded and played).

Although not depicted in FIG. 3, it can be assumed that the portable terminal is connected to the web server through Internet and/or a cellular network and is displaying a webpage provided by the web server. According to exemplary embodiments, if the portable terminal is not connected to Internet or cellular network, then the procedure for generating a clip data item may further include a step for checking the network connection state of the portable terminal and, if it is determined that the portable terminal is not connected, then further including a step for establishing a connection to the network.

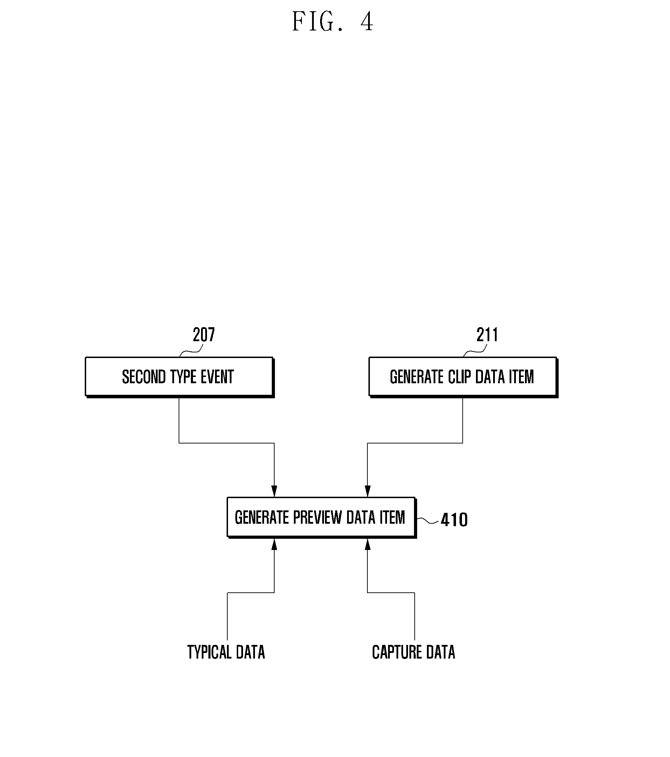

FIG. 4 is a diagram illustrating a principle of preview data item generation in a method for managing items on a clipboard of a portable terminal according to an exemplary embodiment of the present invention. Particularly, FIG. 4 depicts the details of preview data item generation step of FIG. 2.

Referring to FIG. 4, the preview data item can be generated at the second type event detection step at step 207 or the clip data generation step at step 211 in FIG. 2 according to an exemplary embodiment of the present invention. That is, at step 410, the control unit 150 can control to generate the preview data item when the second type event for data copy is input such as, for example, at step 207 of FIG. 2. In addition, at step 410, the control unit 150 also can control to generate the preview data item when the clip data item is generated such as, for example, at step 211 of FIG. 2.

The control unit 150 can generate the preview data item according to a first method using typical data and a second method using captured data. If the preview data item is generated using the first method, the control unit 150 may generate the preview data with the text included in the copied data item, or the multimedia data (e.g. still image) downloaded and saved as indicated in the copied data, or a combination of the text included in the copied data item and the multimedia data.

If the preview item is generated using the second method, the control unit 150 captures the region blocked by the second type event to generate a capture image and processes the capture image into a preview data item.

After generating the preview data item, the control unit 150 can store the clip data item in match (e.g., in linked relation) with the corresponding preview data item. The preview data item may be configured with meta-information for calling the actual clip data item corresponding to the preview data in the header of the preview data.

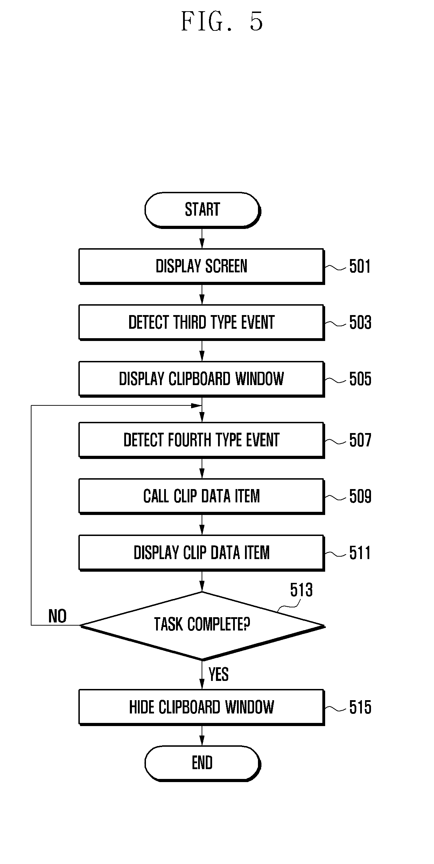

FIG. 5 is a flowchart illustrating a method of managing items on a clipboard of a portable terminal according to an exemplary embodiment of the present invention. Particularly, FIG. 5 is directed to an operation of pasting the clip data item saved on a clipboard.

Referring to FIG. 5, the control unit 150 controls to display a screen in order for the user to enter data (e.g. text, multimedia data, etc.) at step 501. For example, the control unit 150 may execute an application for loading data in response to a user request and display the execution screen of the application. In an exemplary embodiment of the present invention, applications for enabling a user to load the data may include an email application, a document application, a text messaging application, a web browsing application, a Social Network Service (SNS) application, and/or the like. For example, such applications allow a user to input data, and more specifically, allows a user to paste data (e.g., a clip data item) which is stored in a clipboard.

Next, the control unit 150 detects a third type event at step 503. For example, the control unit 150 detects a call event for calling a clip data item stored on the clipboard in the state where the application execution screen is displayed. For example, the third type event may correspond to a call event corresponding to a call for pasting (e.g., inserting) a clip data item stored on the clip board while the display continues to display the application execution screen. In an exemplary embodiment of the present invention, the third type event may be a touch-based input (e.g., via a touchscreen on the display unit) or a physical key input.

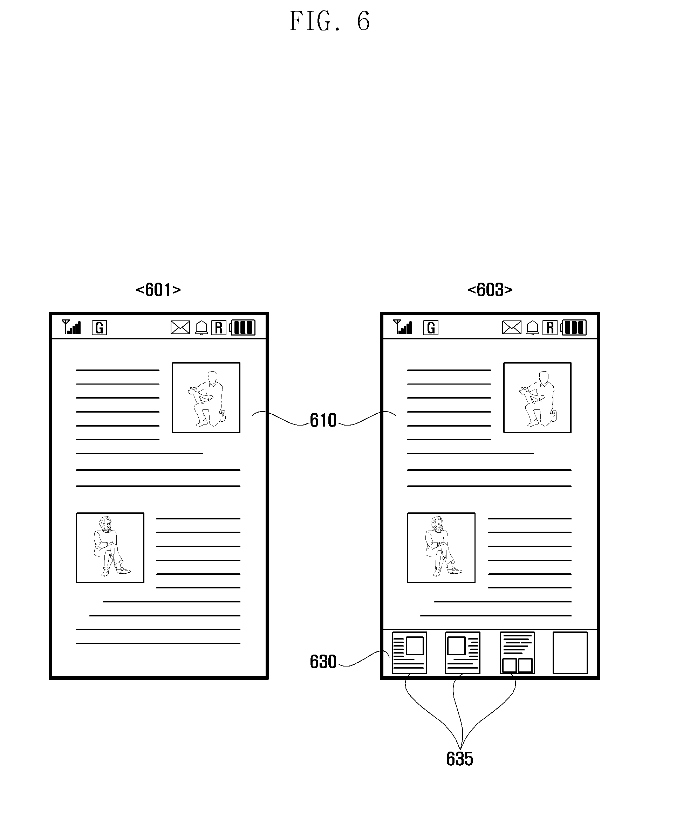

Upon detection of the third type event, the control unit 150 controls to display the clipboard window on the execution screen at step 505. In an exemplary embodiment, the clipboard window presents a plurality of preview data items representing respective clip data items so as to facilitate user's manipulation on the clipboard function (particularly, for example, a paste manipulation). The clipboard window is described in detail with reference FIG. 6 later.

Next, the control unit 150 detects a fourth type event occurred in the state where the clipboard window is displayed on the screen at step 507. In an exemplary embodiment, the fourth type event may be an event for pasting a preview data item selected by the user in the clipboard window to a position designated by the user on the screen. As an example, the fourth type event may be a touch-based input (e.g. drag and drop input) or a physical key input (e.g. navigation key manipulation for selection a preview data item and then key input for pasting the preview data item to a certain position).

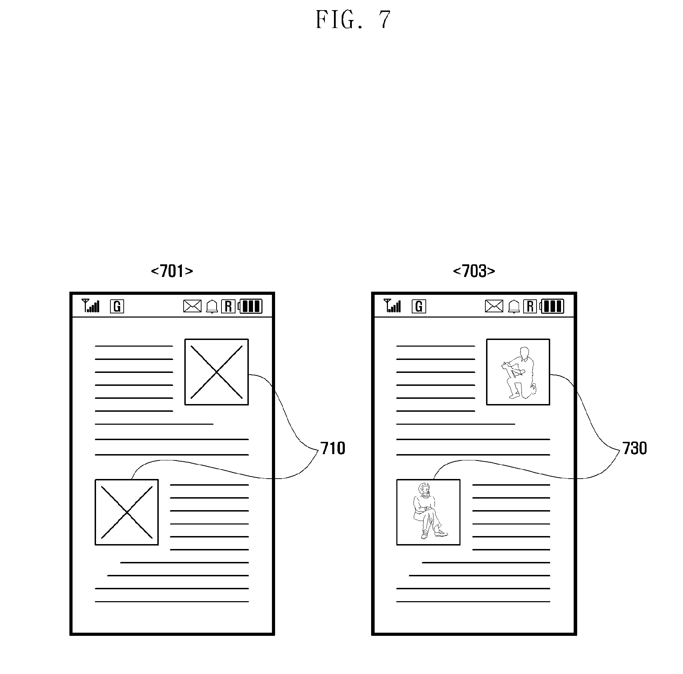

Next, the control unit 150 calls the clip data item represented by the preview data item selected by the fourth type event (e.g., the paste event) from the clipboard at step 509 and pastes the clip data item to the position designated by the fourth type event at step 511. As aforementioned, the clip data item including multimedia data can be displayed in different ways according to the multimedia data download method. The control unit 150 control to display the pasted clip data item in different ways according to the connection status of the portable terminal to the network (e.g. Internet or cellular network). The paste operation is described in detail later with reference to FIG. 7.

Next, the control unit 150 determines whether the paste operation has completed at step 513. If the paste operation has not completed at step 513, then the control unit 150 returns the procedure to step 507. At this time, the control unit 150 executes another application in response to a user request and displays the execution screen of this application to paste the clip data item according to the user action as above. If the paste operation has completed at step 513, then the control unit 150 hides the clipboard window at step 515. That is, the control unit 150 can control such that the clipboard window disappears on the screen. In other exemplary embodiments, the clipboard window may be displayed whenever the clipboard stores data items. Moreover, according to other exemplary embodiments, a user may be able to toggle between at least a view in which the clipboard window is displayed on portion of the display and a view in which the clipboard window is minimized (e.g., such that the clipboard window disappears).

FIG. 6 is a diagram illustrating exemplary application execution screens for showing an operation of clipboard window display in a clipboard control method according to an exemplary embodiment of the present invention.

Referring to FIG. 6, the event for calling a clip data item can be input by a user in the state in which the application execution screen (e.g., the display region) 610 is displayed as shown in the screen image 601. If the third type event is detected, the clipboard window (e.g., the clipboard region) 630 is displayed at a part on the execution screen 610 as shown in the screen image 603.

According to exemplary embodiments of the present invention, the clipboard window 630 may be overlaid on the display region 610. According to other exemplary embodiments of the present invention, the clipboard window 630 may be displayed with an action pushing off the display region 610. For example, a size of the display region 610 may be reduced by as much as the size of the clipboard window 630 (particularly in height) such that the clipboard window 630 may be displayed in the region no longer occupied by the display region 610. In other words, the size of the display region 610 may be reduced such that the display region 610 having a reduced size and the clip board window 630 may be displayed so as to be tiled on the region previously occupied by the display region 610 before the display region 610 was reduced. The clipboard window 630 may be divided into a certain number of partitions each having at least one preview data item 635 representing the corresponding clip data item copied and stored by the user. Although the clipboard window 630 is divided into four partitions in FIG. 6, the number of partitions can be set by the user.

For example, the clipboard window 630 can be configured with a single row divided into 5 partitions or double rows each divided into 4 partitions. The clipboard window 630 can be configured so as to be divided into a number of partitions as many as the clip data items saved until then or a fixed number of partitions. In case that the number of saved clip data items is greater than the number of partitions, the clip data items can be navigated by scrolling across the clipboard window in response to the user input (e.g. touch-based sweep gesture).

In an exemplary embodiment, the user may be able to control where on the screen the clipboard window 630 appears. For example, the user may be able to set user preferences associated with where the clipboard window 630 appears. The user preferences may be application specific (e.g., such that the clipboard window 630 may have different locations depending on the specific application, or on the user preferences associated with the specific application), or the preferences may be user specific (e.g., such that the clipboard window 630 is displayed in the same location for all applications being operated by the user).

As shown in FIG. 6, the display unit 120 according to exemplary embodiments of the present invention can display the display region 610 for presenting the screen for selecting certain data to copy in response to a user command, and the screen for inputting data in response to a user command, and the clipboard window (clipboard region) 630 including preview data according to the clip data stored accumulatively in response to the user command. As shown in the screen image 603 of FIG. 6, the clipboard region 630 can be arranged at a bottom region of the display in opposition to a top region providing a status bar indicating the terminal's operation status (e.g. received signal electric field state, message reception indicator, battery indicator, etc.).

FIG. 7 is a diagram illustrating exemplary application execution screens for showing an operation of clip data item display in a clipboard control method according to an exemplary embodiment of the present invention. Particularly, FIG. 7 shows the exemplary screen images in which clip data items are pasted according to an exemplary embodiment of the present invention.

Referring to FIG. 7, if the clip data items are generated using only the link information of the multimedia data according to, for example, the first download method in a state in which the portable terminal is not connected to the network (e.g. Internet or cellular network), the clip data items are presented as shown in the exemplary screen image 701. In the screen image 701, the clip data items 710 corresponding to still or motion pictures or audio files are disabled. That is, the areas where the multimedia data items among the clip data items are pasted are expressed with display or playback-unavailable marks.

Meanwhile, if the clip data items are generated with the multimedia data downloaded according to, for example, the second download method or only with the link information of the multimedia data according to the first download method in a state in which the portable terminal is connected to the network, the clip data items are presented as shown in the exemplary screen image 703. In the screen image 703, the clip data items 730 corresponding to the still or motion pictures or audio files are enabled. That is, the multimedia data are displayed and/or played at the positions at which they are pasted.

If the clip data item includes text with a hyperlink, the user can access the webpage linked through the hyperlink if the portable terminal is connected to the network as shown in the screen image 703 but not if the portable terminal is not connected to the network as shown in the screen image 701.

Although not depicted in FIG. 7, the clip data items can be provided in web language-based format. For example, if the clip data items are provided in a web language-based format, then the clip data item can pasted while maintaining the format of the data copied from the source data. For example, the clip data item can be pasted without change in font size, font color, font type, paragraph style, and multimedia data arrangement.

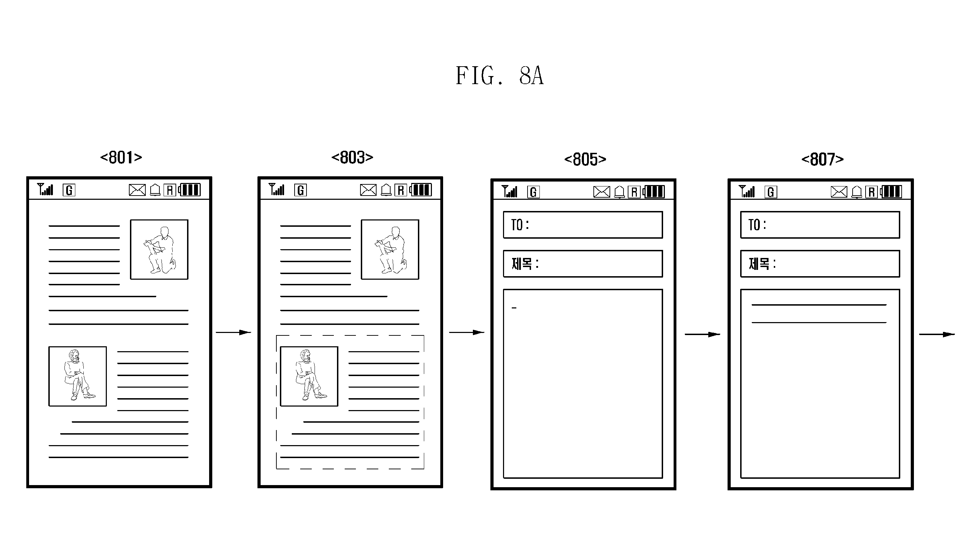

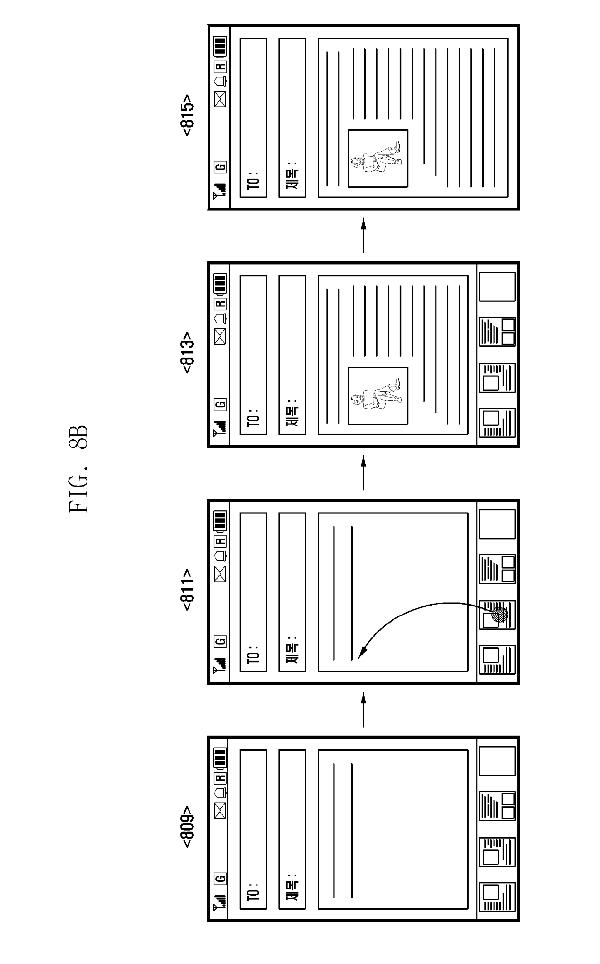

FIGs. 8A and 8B are diagrams illustrating exemplary execution screens of an application operating with a clipboard control method according to an exemplary embodiment of the present invention.

In FIGs. 8A and 8B, it is assumed that the application execution screen displays visual data (e.g., text and multimedia data) in the display region as shown in the exemplary screen image 801. Also, it is assumed that the portable terminal is connected to a certain server through Internet and displays a web language-based screen (e.g. a webpage) provided by the server in the state corresponding to the screen image 801.

The user can make the first type event in the state where the webpage is displayed as shown in the screen image 801. For example, the first type event can be made in such a way that the user makes a touch at a position and drag to select an area on the screen. In this case, the control unit 150 blocks the area in response to the first type event as shown in the screen image 803. In other words, the user may use a first type event to select an area (e.g., and the contents therein) on the screen.

When a certain area is selected as the copy data item by the fist type event as shown in the screen image 803, the user can make the second type event. If the second type event is detected, the control unit 150 generates a clip data item using the copied data item and saves the clip data item on the clipboard. Although some exemplary embodiments discriminate between the first and second type events, the present invention is not limited thereto. For example, the first and second type events may be integrated into a single event which triggers the blocked data copy and clip data item generation.

The user can input a command for executing another application in the state where the webpage is displayed. For example, if the user input command to execute an email application, the control unit 150 executes the email application and displays the execution screen (e.g., an email composition screen) of the email application on the display region as shown in the exemplary screen image 805.

In the state in which the email application execution screen 805 is displayed, the user can enter data (e.g. text) to compose an email in the text box as shown in the exemplary screen image 807.

During the email composition, the user can call the clip data item. In other words, during email composition, a user may invoke (i.e., make) a third type event for calling the clipboard window. If a third type event can be detected (i.e., if a clip data item is called), then the control unit 150 controls to display the clipboard window on a region of the display unit 120 as shown in the screen image 809. In FIGs. 8A and 8B, it is assumed that three clip data items have been saved on the clipboard. For example, the clip data item saved most recently among the three clip data items can be the one generated through the operations corresponding to the screen images 801 and 803. As shown in the screen image 809, the clipboard window is divided into four partitions of which the first three are occupied by the clip data items and the last one is left empty. FIGs. 8a and 8b are directed to the case in which the clipboard window push off the display region such that the clipboard window and the display region are provided as separated as denoted by reference numbers 809 to 813. For example, as shown in part 809, a size of the display region is reduced by as much as the size of the clipboard window such that the clipboard region fills the empty region at the bottom region caused by the reduction in size of the display region. At this time, as shown in parts 809 to 813, there is no change of data input in the display region (e.g. font size, arrangement, etc.) while the length of the display region 610 changes. Although not depicted in FIGs. 8a and 8b, the clipboard window can be provided as overlaid on the display region as denoted by reference number 603 of FIG. 6.

In the state in which the clipboard window is displayed as shown in the screen image 809, the user can make the fourth event for pasting the selected preview data item onto the email composition screen as shown in the screen image 811. For example, the user can make the fourth type event in such as way of selecting one of the preview data items, and dragging and dropping the selected preview data item onto the email composition window as shown in the screen image 811. As another example, the fourth type event may be made in such a way that the user selects a preview data item and paste the selected preview data item in the email composition window through a series of physical keys manipulation. As another example, the fourth type event may be made in such a way that the user selects a preview data item and pasts the selected preview data item in an application (e.g., in the email composition window) through a series of manipulations on a touch screen (i.e., beyond merely dragging and dropping the selected preview data item).

If the fourth type event is detected, then the control unit 150 can check the location of the clip data item represented by the preview data item selected by the fourth type event. The control unit 150 can paste the located clip data item into the email composition window as shown in the screen image 813. As an example, the clip data item can be a combination of text and picture as shown in the screen image 813. The clip data item can be arranged along with the data entered by the user (e.g., text input by the user as shown in the screen image 807). The clip data item can be the data object formatted based on the web language such that the style of the source data (e.g., font size, font color, paragraph style, image data arrangement, hyperlink, etc.) is maintained. The clipboard window can be maintained during the process for pasting the clip data items in response to the fourth type event as shown in the screen image 813. Accordingly, the user can repeat pasting the same and/or different clip data items.

In the state in which the selected clip data item is pasted as shown in the screen image 813, the user can input a command for completing the paste operation. The paste complete command can be made by a touch-based input or a physical key input. If the paste complete command is detected, the control unit 150 controls such that the clipboard window disappears while the email composition screen having the data entered by the user and the pasted clip data item is maintained. Although the clipboard window disappears, the three clip data items and preview data items representing the clip data items are retained on the clipboard.

Although not depicted in FIGs. 8A and 8B, the preview data item can be cut from the clipboard window and then pasted to the email composition window. In this case, the cut and pasted preview data item is deleted from the clipboard window. If the preview data item is cut from the clipboard window, then the clip data item represented by the preview data item is also deleted from the clipboard along with the preview data item. Of course, the preview data item and the corresponding clip data item can be deleted regardless of the cut and paste operation.

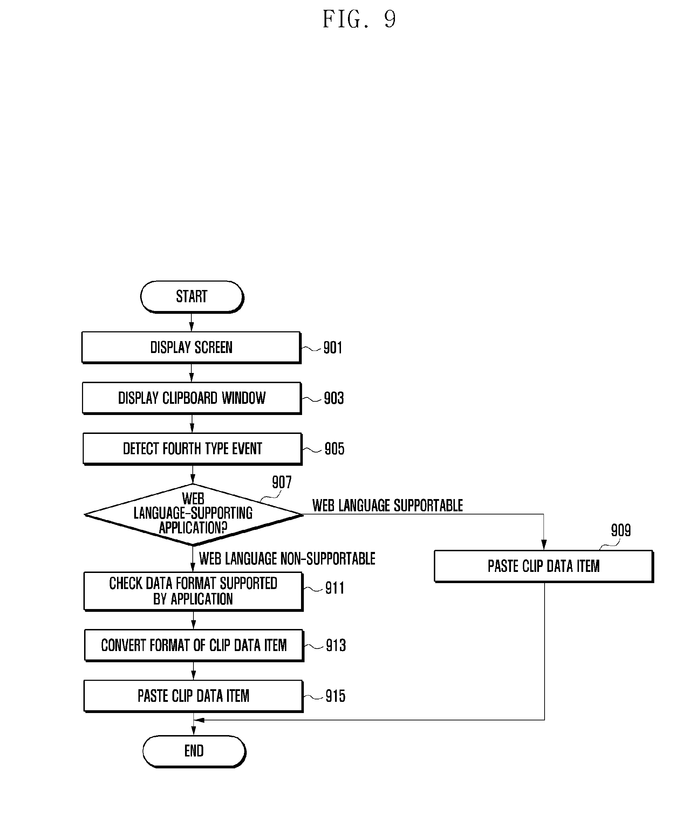

FIG. 9 is a flowchart illustrating a method of managing items on a clipboard of a portable terminal according to an exemplary embodiment of the present invention. Particularly, FIG. 9 is directed to an operation of pasting a clip data item in an application-specific format.

Referring to FIG. 9, the control unit 150 controls to display a screen allowing the user to enter data at step 901. Next, the control unit 150 controls to display the clipboard window in response to a user request at step 903. The clipboard window can include at least one preview data item.

Next, the control unit 150 detects a fourth type event commanding paste of the clip data item represented by the preview data item selected from the clipboard window at step 905.

If the fourth type event is detected, the control unit 150 checks the type of the currently running application at step 907. For example, the control unit 150 determines whether the currently running application is a web language-based application (e.g., a web browsing application, an SNS application, an email application, a web document application, or the like) or a normal application (e.g., a text messaging application, and/or a document application not supporting web language).

If the currently running application is a web language-based application, then the control unit 150 pastes the clip data item to screen in the web language-based format at step 909.

If the currently running application is not a web language-based application, then the control unit 150 checks the formats supported by the application at step 911.

Next, the control unit 150 converts the clip data item into the data format supported by the application at step 913. For example, if the currently running application is a text messaging application, then the control unit 150 converts the clip data item into a data format supported by the text messaging application. As another example, if the currently running application is a document application, then the control unit 150 converts the web language-based clip data item into a data format supported by the document application. When converting the data format, the multimedia data included in the web language-based clip data item can be deleted or retained depending on whether the application can process the multimedia data. That is, the control unit 150 may control to convert the data formation of the clip data item with or without the multimedia data included in the clip data item.

Finally, the control unit 150 pastes the converted clip data item to where the user intends on the screen at step 915. At this time, the converted clip data item can be pasted with or without the multimedia data depending on whether the application can process the multimedia data.

As described above, the clipboard control method and apparatus according to various exemplary embodiments of the present invention is capable of improving utilization efficiency of the clipboard function of a portable terminal. The clipboard control method according to various exemplary embodiments of the present invention is capable of copying various types of data items in accumulative manner and pasting the data items individually without restriction in time and application, thereby resulting in improvement of user convenience. The clipboard control method according to exemplary embodiments of the present invention is advantageous in copying and pasting different types of data items simultaneously without data-specific application executions, thereby resulting in reduction of data processing delay.

The clipboard control method according to various exemplary embodiments of the present invention may be capable of copying a plurality of data items and saving the data items as clip data items on the clipboard and then pasting each data item where and when the user intends. The clipboard control method according to various exemplary embodiments of the present invention may also be capable of copying and pasting a combination of text and multimedia data such as still picture, audio file, and motion picture. The clipboard control method according to various exemplary embodiments of the present invention may be applied to all the types of information processing devices having the clipboard function. The clipboard control method according to exemplary embodiments of the present invention may be capable of improving user convenience and terminal usability and competitiveness with the improved clipboard functionality.

The above-described clipboard control method according to various exemplary embodiments of the present invention can be implemented in the form of computer-executable program commands and stored in a computer-readable storage medium. The computer readable storage medium may store the program commands, data files, and data structures in individual or combined forms. The program commands recorded in the storage medium may be designed and implemented for various exemplary embodiments of the present invention or used by those skilled in the computer software field.

The computer-readable storage medium includes magnetic media such as a floppy disk and a magnetic tape, optical media including a Compact Disc (CD) ROM and a Digital Video Disc (DVD) ROM, a magneto-optical media such as a floptical disk, and the hardware device designed for storing and executing program commands such as ROM, RAM, and flash memory. The programs commands include the language code executable by computers using the interpreter as well as the machine language codes created by a compiler. The aforementioned hardware device can be implemented with one or more software modules for executing the operations of the various exemplary embodiments of the present invention.

While the invention has been shown and described with reference to certain exemplary embodiments thereof, it will be understood by those skilled in the art that various changes in form and details may be made therein without departing from the spirit and scope of the present invention as defined by the appended claims and their equivalents.

## Claims

1. A portable terminal providing a clipboard, comprising:
a touchscreen; and
a control unit which controls presenting a display region showing a screen corresponding to user command on the touchscreen in response to an execution of at least one application, presenting a clipboard region at a part of the touchscreen in response to a user command, and displaying clip data selected by the user among at least one clip data appearing in the clipboard region on the display region.

2. The portable terminal of claim 1, wherein the clipboard region is presented so as to be overlaid on or separated from the display region.

3. The portable terminal of claim 2, wherein the clipboard region is presented at an area in opposition to another area providing a status bar of the portable terminal.

4. The portable terminal of claim 1, wherein the control unit controls generating the clip data based on a web-language and storing the clip data in the clipboard, and
wherein the clip data includes text and multimedia data.

5. The portable terminal of claim 4, wherein the clip data is formatted with commands defining font size, font color, font type, paragraph style, multimedia data, multimedia data arrangement, and hyperlink, and
wherein the clip data is formatted in the same format as the copied data.

6. The portable terminal of claim 4, wherein the control unit determines whether copied data corresponding to the clip data is a web-language based data, and determines a clip data generation scheme according to data type of the copied data.

7. The portable terminal of claim 1, wherein the clipboard region respectively presents preview data corresponding to each of the at least one clip data, and
wherein the preview data is generated as at least one of a representative data and a capture data.

8. A method for managing a clipboard of a portable terminal, comprising:
executing at least one application;
presenting a display region showing a screen corresponding to a user command in response to the execution of the application;
presenting a clipboard region at an area of the touchscreen in response to a user command; and
displaying clip data selected by the user among at least one clip data appearing in the clipboard region on the display region.

9. The method of claim 8, further comprising:
displaying a screen having a source data to be copied;
receiving a user command corresponding to an instruction for copying of the source data on the screen; and
generating a clip data with a region selected from the source data in response to the user command.

10. The method of claim 8, wherein the presenting of the clipboard region comprises displaying the clipboard region so as to be overlaid on the display region, or so as to be separated from the display region.

11. The method of claim 8, wherein the presenting of the clipboard region comprises presenting the clipboard region at an area in opposition to another area providing a status bar of the portable terminal.

12. The method of claim 9, wherein the generating of the clip data comprises:
formatting the clip data based on a web-language; and
storing the clip data in the clipboard.

13. The method of claim 12, wherein the generating of the clip data comprises formatting the clip data with commands defining font size, font color, font type, paragraph style, multimedia data, multimedia data arrangement, and hyperlink, and
wherein the clip data being formatted in the same format as the copied data.

14. The method of claim 12, wherein the storing of the clip data comprises accumulating at least one clip data copied in response to user inputs.

15. The method of claim 14, wherein the presenting of the clipboard region comprises displaying at least one preview data corresponding to at least one clip data in the clipboard region.
